(19) Europäisches Patentamt European Patent Office Office européen des brevets

(11) **EP 4 641 915 A1**

(12) **EUROPÄISCHE PATENTANMELDUNG**

(43) Veröffentlichungstag:
**29.10.2025   Patentblatt 2025/44**

(21) Anmeldenummer: **25171205.5**

(22) Anmeldetag: **17.04.2025**

(51) Internationale Patentklassifikation (IPC):
**H02P 21/13** (2006.01)    **H02P 21/16** (2016.01)
**H02P 21/22** (2016.01)    **H02P 29/60** (2016.01)

(52) Gemeinsame Patentklassifikation (CPC):
**H02P 21/16; H02P 21/13; H02P 21/22; H02P 29/60;**
H02P 2205/01

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **22.04.2024   DE 102024111256**

(71) Anmelder: **ebm-papst Mulfingen GmbH & Co. KG**
**74673 Mulfingen (DE)**

(72) Erfinder:
• **Schroth, Dr., Sebastian**
 **74635 Kupferzell (DE)**
• **Greiss, Marius**
 **97070 Würzburg (DE)**

(74) Vertreter: **Staeger & Sperling**
**Partnerschaftsgesellschaft mbB**
**Sonnenstraße 19**
**80331 München (DE)**

(54) **MOTORSTEUERSCHALTUNG SOWIE VERFAHREN ZUR ÜBERWACHUNG ZUMINDEST EINES ZWISCHENKREISKONDENSATORS DER MOTORSTEUERSCHALTUNG**

(57)    Die Erfindung betrifft eine Motorsteuerschaltung (10) sowie ein Verfahren zur Überwachung zumindest eines Zwischenkreiskondensators (1) in einem elektrischen Zwischenkreis einer an einer Spannungsquelle (6) betriebenen Motorsteuerschaltung (10) eines elektrisch kommutierten (EC) Motors (4) mit Motorwicklungen (41), bei welcher/m Gleichrichterdioden des Gleichrichters (2) bestimmungsgemäß schließen, um eine Energieaufnahme aus der Spannungsquelle (6) für eine definierte Zeitspanne zu verhindern, wobei ein Ermitteln einer Zwischenkreiskapazität ($C_{ZK}$) des Zwischenkreiskondensators (1), sowie ein Bestimmen einer Rest-Lebensdauer oder eines Lebensdauer- und/oder Brauchbarkeitsdauer-Endes des Zwischenkreiskondensators (1) aus der ermittelten Zwischenkreiskapazität ($C_{ZK}$) mittels einer Auswerteschaltung (7) erfolgt.

Fig. 1

**Beschreibung**

Die Erfindung betrifft eine Motorsteuerschaltung sowie ein Verfahren zur Überwachung zumindest eines Zwischenkreiskondensators in einem elektrischen Zwischenkreis einer an einer Spannungsquelle betriebenen Motorsteuerschaltung eines elektrisch kommutierten Motors mit Motorwicklungen.

Aus dem Stand der Technik ist eine Vielzahl von Verfahren zur Ermittlung der momentanen Kapazität und/oder des inneren Verlustwiderstands als Alterungsindikator eines oder mehrerer Zwischenkreiskondensatoren im Betrieb eines elektrisch kommutierten Motors bekannt.

In dem Dokument EP 0 652 445 A2 wird eine Methode beschrieben, wie mit Hilfe von gezielten Schaltvorgängen des Inverters der Zwischenkreiskondensator geladen bzw. entladen wird, sodass über den gemessenen Spannungs- und Stromverlauf die Zwischenkreiskapazität berechnet werden kann.

In der DE 10 2019 117 369 A wird eine Methode beschrieben, wie der Zwischenkreiskondensatorstrom mit Hilfe des Netzstroms und des Motorstroms berechnet werden kann. Dabei kann mit dem berechneten Zwischenkreisstrom und durch Anwendung der Formel $u_{dc} = 1/C_{ZK} \int i_{dc} dt$ die Zwischenkreisspannung berechnet werden. Der Kapazitätswert $C_{ZK}$ wird dabei aus einem Vergleich zwischen dem berechneten und dem gemessenen Zwischenkreisrippel der Spannung gebildet, wobei ein Integrierer, die Kapazität so lange anpasst, bis ein Abgleich zwischen Modell und gemessener Zwischenkreisspannung stattgefunden hat.

In der CN105717368B wird eine Methode beschrieben, wie bei einem 3-phasigen Wechselrichter Kapazität und der äquivalente Serienwiderstand (ESR) als Alterungsindikator des Zwischenkreiskondensators überwacht wird. Der Kondensatorstrom wird mit Hilfe der Formel: idc = Sa · ia + Sb · ib + Sc · ic rekonstruiert, wobei *ia, ib, ic* die Motorphasenströme und *Sa, Sb, Sc* die Schaltzustände des Inverters, ohnehin im Motorcontroller vorliegen. Es wird außerdem der Spannungsabfall am Zwischenkreiskondensator zu einem bestimmten Zeitpunkt herangezogen.

In der EP 3 477 314 B1 wird eine Methode zur Echtzeiterfassung der Zwischenkreiskondensatorkapazität beschrieben, welche bei bestimmten Schaltzuständen des Inverters, bei denen der Strom durch den Dioden Gleichrichter des Inverters 0*A* beträgt den Zwischenkreisstrom und die Zwischenkreisspannung mit Hilfe der ohnehin vorhandenen Sensorik erfassen und im Anschluss mit Hilfe einer Näherungsformel auf die Kapazität schließen.

Ferner wird in der EP 3 555 644 B1 eine Methode beschrieben, wie die Entladekurve im Zwischenkreisrippel der Spannung gemessen und mit Hilfe einer digitalen Auswertung auf die Kapazität und die Restlebensdauer des Kondensators geschlossen wird.

Der Erfindung liegt deshalb die Aufgabe zugrunde, die vorgenannten Nachteile zu überwinden und eine Motorsteuerschaltung sowie ein Verfahren bereitzustellen, bei welcher/m eine Ermittlung der momentanen Kapazität und/oder des inneren Verlustwiderstands als Alterungsindikator eines oder mehrerer Zwischenkreiskondensatoren im Betrieb eines elektrisch kommutierten Motors optimiert ist.

Diese Aufgabe wird durch die Merkmalskombination gemäß Patentanspruch 1 gelöst.

Grundgedanke der vorliegenden Erfindung ist, dass bei der Regelung von Elektromotoren häufig die sogenannte feldorientierte Regelung verwendet wird. Die Motorphasenströme $i_a$, $i_b$, $i_c$ werden dabei vom statorfesten Koordinatensystem in ein sich drehendes rotorfestes Koordinatensystem in die Komponenten $i_d$, $i_q$ überführt. Im Allgemeinen wird die q-Komponente des Stroms für die Regelung der Drehzahl verwendet. Die Abweichung zwischen Soll- und Ist-Drehzahl wird dazu beispielsweise mit Hilfe eines Proportional-Integral-Reglers (PI-Regler) minimiert. Aus der Abweichung wird dazu ein Sollwert für den das Drehmoment bildenden q-Strom berechnet, sodass der Regler, vereinfacht gesagt das Drehmoment des Motors so lange ändert, bis die Solldrehzahl erreicht wird. Die d-Stromkomponente hingegen trägt nicht zur Bildung des Drehmoments bei, sondern bildet ein nicht das Drehmoment des Motors beeinflussendes Magnetfeld der Motorwicklungen aus. Um hohe Wirkungsgrade der Elektromotoren zu erzielen, wird der d-Strom daher üblicherweise auf einen Sollwert von 0*A* beispielsweise mit Hilfe eines PI-Reglers geregelt. Für das Erreichen höherer Drehzahlen wird der d-Strom auch oftmals sogar auf einen negativen Sollwert eingeregelt um das Magnetfeld des Elektromotors damit gezielt zu schwächen (Feldschwächebetrieb). Die Spulen des Elektromotors speichern also Energie im Magnetfeld ihrer Wicklungen, welche gezielt über die d-Stromkomponente beeinflusst werden kann.

Bei Elektromotoren, die am 3-phasigen Netz betrieben werden, wird üblicherweise nur ein kleiner Energiezwischenspeicher, zum Beispiel ein Zwischenkreiskondensator, zwischen Netz und Frequenzumrichter benötigt, um einen stabilen Motorbetrieb zu gewährleisten. Der Zwischenkreiskondensator verringert den Rippel der Zwischenkreisspannung, der durch die pulsweise Leistungsentnahme durch beispielsweise einen PWM-Umrichter entsteht. Der Spannungsrippel ist somit im Allgemeinen von der Größe der Kapazität des Zwischenkreiskondensators abhängig. Bei 3-phasigen Elektromotoren ist diese Abhängigkeit jedoch vergleichsweise gering, da die 3 um 120° phasenverschobenen Netzspannungen nach der Gleichrichtung zu einem kontinuierlicheren Leistungsfluss aus dem Netz führen, als dies zum Beispiel beim Anschluss an nur eine einzige Netzphase der Fall wäre. Üblicherweise wird für die Erkennung der Alterung von Kondensatoren ein Abfallen der Kapazität oder ein Anstieg des inneren Verlustwiderstands (ESR; equivalent series resistance) als Alterungsindikator herangezogen.

Die zu Grunde liegende Idee der Erfindung ist nun den Zwischenkreisspannungsrippel bei einem 3-phasigen Elektromotor für einen kurzen Zeitraum durch das gezielte Speichern und Entladen von Energie im Magnetfeld der Motorwicklungen zu erhöhen und aus dem sich ergebenden Zwischenkreisspannungsrippel, welcher meist ohnehin bei den Geräten erfasst wird, Rückschlüsse auf die Alterung des Zwischenkreiskondensators zu ziehen. Diese Lade- und Entladevorgänge werden über eine gezielte Vorgabe der d-Stromkomponente als Sollwert für den ohnehin bestehenden Regler erreicht.

Erfindungsgemäß wird daher ein Verfahren zur Überwachung zumindest eines Zwischenkreiskondensators in einem elektrischen Zwischenkreis einer an einer Spannungsquelle und/oder einer Netzspannung betriebenen Motorsteuerschaltung eines elektrisch kommutierten Motors mit Motorwicklungen vorgeschlagen. Dabei umfasst die Motorsteuerschaltung einen Gleichrichter und einen Wechselrichter, insbesondere einen Frequenzumrichter. Ferner befindet sich zwischen dem Gleichrichter und dem Wechselrichter der zumindest eine zu überwachende Zwischenkreiskondensator. Bei dem Verfahren erfolgt ein Erfassen der Motorphasenströme und ein Ermitteln einer d-Stromkomponente zum Steuern und/oder Regeln des Motors, insbesondere in Zeigerschreibweise im rotierenden bzw. rotorfesten Koordinatensystem. Des Weiteren erfolgt ein Erfassen und/oder Messen eines Spannungsrippels einer sich an dem Zwischenkreiskondensator einstellenden Zwischenkreisspannung. Darüber hinaus erfolgt ein Regeln der d-Stromkomponente mittels eines Reglers, derart, dass Energie aus der Spannungsquelle und/oder Motorsteuerschaltung in einem Magnetfeld der Motorwicklungen des EC-Motors gespeichert wird sowie ein Regeln der d-Stromkomponente mittels des Reglers, derart, dass die aus der Spannungsquelle und/oder Motorsteuerschaltung in dem Magnetfeld der Motorwicklungen des EC-Motors gespeicherte Energie in die Motorsteuerschaltung, insbesondere den zumindest einen Zwischenkreiskondensator, zurück entladen wird. Beim Entladen der gespeicherten Energie aus dem Magnetfeld der Motorwicklungen des EC-Motors ist die Zwischenkreisspannung größer als eine Eingangsspannung der Spannungsquelle, derart, dass Gleichrichterdioden des Gleichrichters bestimmungsgemäß sperren, um eine Energieaufnahme aus der Spannungsquelle für eine definierte Zeitspanne zu verhindern. Außerdem erfolgt ein Ermitteln einer Zwischenkreiskapazität des Zwischenkreiskondensators und ein Bestimmen einer Rest-Lebensdauer oder eines Lebensdauer- und/oder Brauchbarkeitsdauer-Endes des Zwischenkreiskondensators aus der ermittelten **Zwischenkreiskapazität** mittels einer Auswerteschaltung, welche insbesondere einen Mikrocontroller aufweist.

Vorteilhaft gegenüber dem Stand der Technik ist, dass die Auswertung der Kapazität im laufenden Betrieb des Motors durchgeführt werden kann und dabei nur eine geringfügige Beeinflussung des Motorbetriebs stattfindet. Die Abnahme der Zwischenkreiskapazität aufgrund von Alterungseffekten findet außerdem häufig über einen Zeitraum von mehreren Wochen bis Monaten statt, sodass das Verfahren nicht kontinuierlich, sondern lediglich zu festen Wartungsintervallen durchgeführt werden kann. Außerdem wird bei dem Verfahren keine zusätzliche Hardware benötigt, sondern es wird auf die ohnehin bestehende Sensorik des Motors zurückgegriffen. Zur Auswertung des Strom- und Spannungsverlaufs kann auf bestehende Auswertungsmethoden zurückgegriffen werden, da der Motorstrom und die Zwischenkreisspannung ohnehin vom Motorcontroller erfasst werden.

Die in den Motorwicklungen gespeicherte Energie $W = \frac{1}{2} L * i_L^2$ lässt sich in eine dazugehörige Leistung $P_{Wicklung} = \frac{1}{2} L \cdot i_L \cdot \frac{di_L}{dt}$ umrechnen, wobei L die Wicklungsinduktivität und $i_L$ den Strom durch die Wicklung bezeichnet.

In einer vorteilhaften Ausführungsvariante ist vorgesehen, dass die d-Stromkomponente zum Speichern von Energie aus der Spannungsquelle und/oder Motorsteuerschaltung in dem Magnetfeld der Motorwicklungen derart mittels des Reglers geregelt wird, dass gilt:

$i_L > 0$ und $\frac{di_L}{dt} > 0$ ; oder $i_L < 0$ und $\frac{di_L}{dt} < 0$.

In einem Ausführungsbeispiel der Erfindung ist vorgesehen, dass die d-Stromkomponente zum Speichern von Energie aus der Motorsteuerschaltung in den Motorwicklungen derart mittels des Reglers geregelt wird, dass das Speichern über mehr als eine Netzperiode der Spannungsquelle kontinuierlich erfolgt. Auf diese Weise wird eine Beeinflussung eines Motorlaufs des EC-Motors verringert.

Ferner ist eine Ausführung günstig, bei welcher die d-Stromkomponente zum Entladen der in dem Magnetfeld der Motorwicklungen gespeicherten Energie aus dem Magnetfeld der Motorwicklungen zurück in die Motorsteuerschaltung derart mittels des Reglers geregelt wird, dass gilt: $i_L > 0$ und $\frac{di_L}{dt} < 0$ ; oder $i_L < 0$ und $\frac{di_L}{dt} > 0$. Vorzugsweise wird die d-Stromkomponente $i_d$ nach der Entladung mittels des Reglers 5 auf einen vorbestimmten negativen Sollwert oder auf den Sollwert 0 A geregelt.

In einer weiteren vorteilhaften Variante ist erfindungsgemäß vorgesehen, dass die d-Stromkomponente mittels des Reglers derart geregelt wird, dass sie einen sägezahnförmigen Verlauf und/oder einen zumindest anteilig sinusförmigen Verlauf und/oder einen rechteckförmigen sprungförmigen Verlauf aufweist.

Weiter vorteilhaft ist es, wenn die Motorsteuerungsschaltung eine Sensorik zum Betrieb des EC-Motors aufweist und diese Sensorik gleichzeitig zur Leistungserfassung und/oder Spannungserfassung des Spannungsrippels am Zwischenkreiskondensators und/oder zur zumindest intermittierenden Ermittlung der Motorphasenströme im Betrieb des EC-Motors verwendet wird.

In einem vorteilhaften Ausführungsbeispiel ist vorgesehen, dass die Motophasenströme im Betrieb des EC-Motors zumindest intermittierend ermittelt werden.

In einer bevorzugten Ausführung erfolgen zur Ermittlung der Kapazität des Zwischenkreiskondensators die Leistungserfassung und die Spannungserfassung am Zwischenkreiskondensator zur Bestimmung der Zwischenkreisspannung.

In einer Ausführungsvariante der Erfindung ist vorgesehen, dass beim Ermitteln der Kapazität der gesamte Spannungsverlauf und/oder ein gefilterter und/oder korrelierter Signalverlauf der Zwischenkreisspannung verwendet werden.

Ferner ist es vorteilhaft, wenn die Ermittlung der Zwischenkreiskapazität durch ein Beobachtersystem erfolgt. Dabei wird der Zwischenkreisstrom aus bereits erfassten Eingangsmessgrößen der Motorsteuerungsschaltung, welche ohnehin zur Regelung des Motorbetriebs benötigt werden, wie beispielsweise der aus dem Netz aufgenommenen Leistung, der vom Motor abgegebenen Leistung, der Netzeingangsspannung, dem Motorstrom, den Strangspannungen des Motors, nachgebildet. Der Zwischenkreisstrom wird anschließend mit der inversen Zwischenkreiskapazität multipliziert und integriert, sodass eine geschätzte Zwischenkreisspannung berechnet wird. Die Differenz der geschätzten Zwischenkreisspannung und der tatsächlich gemessenen Zwischenkreisspannung wird ebenfalls aufintegriert und anschließend als inverse Zwischenkreiskapazität betrachtet, sodass eine Beobachterschleife entsteht. Diese Regelschleife führt die geschätzte Zwischenkreisspannung der gemessenen Zwischenkreisspannung nach und ist somit dazu in der Lage die Zwischenkreiskapazität zu schätzen.

Außerdem ist eine Variante günstig, bei welcher der Beobachter nur aktiviert wird, während der Spannungsrippel der Zwischenkreisspannung größer ist als die Eingangsspannung der Spannungsquelle, danach erfolgt eine Deaktivierung. Dabei werden insbesondere die Aktivierung und/oder Deaktivierung durch eine Multiplikation mit 0 oder innerhalb eines Regelalgorithmus dadurch erreicht, dass eine Berechnung des Beobachters nicht ausgeführt wird.

In einer weiteren vorteilhaften Ausführung werden ein Maximalwert des Spannungsrippels und/oder ein Vergleich zwischen einem erfassten Spannungsverlauf und einer Look-Up-Table dazu verwendet, um auf eine Abnahme der Zwischenkreiskapazität oder einen Anstieg eines inneren Verlustwiderstands des Zwischenkreiskondensators zu schließen. Im Rahmen der Erfindung bezeichnet ein Look-Up-Table eine Datenstruktur, die verwendet wird, um den Wert einer Funktion oder einer anderen Datenmenge effizient abzurufen. Sie besteht aus einem Satz von Schlüssel-Wert-Paaren, wobei jedem Schlüssel ein entsprechender Wert zugeordnet ist. Wenn ein bestimmter Schlüsselwert benötigt wird, kann die Look-Up-Table verwendet werden, um den entsprechenden Wert schnell abzurufen, anstatt die Funktion oder die Daten erneut zu berechnen.

In einer bevorzugten Ausführungsvariante der Erfindung ist der Regler ein PI-Regler ist. Insbesondere wird ein Sollwert für die d-Stromkomponente mit einem überlagerten PI-Regler berechnet. Dabei wird auf einen Eingang des Reglers eine Differenz zwischen der Soll-Zwischenkreisspannung und der gemessenen Zwischenkreisspannung geschalten, wobei insbesondere als Soll-Zwischenkreisspannung eine sprungförmige Anregung auf die gemessene Zwischenkreisspannung aufaddiert wird und/oder ein konstanter Wert genutzt wird, sodass ein Verlauf der d-Stromkomponente von dem Regler gebildet wird.

In einem weiteren vorteilhaften Ausführungsbeispiel ist erfindungsgemäß vorgesehen, dass zur Auswertung der Zwischenkreiskapazität ein Hub, welcher einen Verlauf, insbesondere eine Kurvenform, der Zwischenkreisspannung darstellt, bei einer vorbestimmten und/oder variierendem d-Stromkomponente und Leistung über der Zeit und/oder Zeitintervalle, insbesondere in dem Regler oder einem Datenspeicher oder einem Steuergerät, gespeichert werden und, vorzugsweise mittels eines neuronalen Netzes und/oder einer in dem Regler oder dem Datenspeicher oder dem Steuergerät hinterlegten künstlichen Intelligenz ausgewertet, werden.

In einer weiteren vorteilhaften Variante ist ferner vorgesehen, dass die Kurvenform der d-Stromkomponente mittels eines neuronalen Netzes und/oder einer künstlichen Intelligenz und/oder in Abhängigkeit der Motorleistung und/oder der Drehzahl im Betrieb je nach Arbeitspunkt angepasst wird.

Darüber hinaus ist eine Ausführung günstig, bei welcher ein Spektrum eines vorgegebenen Sollstroms mittels einer Vorfilterung, vorzugsweise mittels eines Tiefpassfilters, zur Vermeidung von Geräuschbildungen der Motorwicklungen angepasst wird, wobei insbesondere gezielt Anteile des Spektrums und/oder eine benötigte Regelreserve und/oder eine Bandbreite reduziert werden.

Ferner wird in einer vorteilhaften Ausführungsvariante der Erfindung eine Temperaturvorhersage einer Temperatur des EC-Motor, vorzugsweise einer Wicklungstemperatur der Motorwicklungen, insbesondere mittels eines überlagerten neuronalen Netzes und/oder eines Temperaturmodells, zum Vorhersagen von Temperatursprüngen ermittelt. Dabei werden die entsprechend vorhergesagten Temperatursprünge durch eine Regelung der d-Stromkomponente mittels des Regler, insbesondere einer Erhöhung der d-Stromkomponente, zumindest anteilig kompensiert.

Erfindungsgemäß wird außerdem eine Motorsteuerschaltung eines elektrisch kommutierten Motors mit Motorwicklungen zur Überwachung zumindest eines Zwischenkreiskondensators in einem elektrischen Zwischenkreis der an einer Spannungsquelle betriebenen Motorsteuerschaltung des EC-Motors vorgeschlagen, vorzugsweise gemäß einem Verfahren gemäß der vorstehenden Offenbarung. Die Motorsteuerschaltung umfasst einen Gleichrichter und einen Wechselrichter, insbesondere einen Frequenzumrichter. Zwischen dem Gleichrichter und dem Wechselrichter befindet sich der zumindest eine zu überwachende Zwischenkreiskondensator. Ferner ist ein Regler zum Regeln einer d-Stromkomponente eines Zwischenkreisstroms vorgesehen, derart, dass Energie aus der Motorsteuerschaltung in einem Magnetfeld der Motorwicklungen des EC-Motors gespeichert wird und/oder die entsprechend aus der Motorsteuerschaltung in dem Magnetfeld der Motorwicklungen gespeicherte Energie in die Motorsteuerschaltung zurück entladen wird. Darüber hinaus ist eine Auswerteschaltung zum Bestimmen einer Rest-Lebensdauer oder eines Lebensdauer- und/oder Brauchbarkeitsdauer-Endes des Zwischenkreiskondensators aus einer ermittelten Zwischenkreiskapazität vorgesehen.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1 einen schematischen Schaltplan einer Motorsteuerschaltung;

Fig. 2 einen zeitlichen Verlauf von Motorphasenströmen sowie einer q-Stromkomponente und einer d-Stromkomponente der Motorsteuerschaltung im rotierenden Koordinatensystem;

Fig. 3 einen zeitlichen Verlauf gleichgerichteter Eingangsspannungen und einer Zwischenkreisspannung sowie einer d-Stromkomponente und eines Motorstroms der Motorsteuerschaltung;

Fig. 4 einen zeitlichen Temperaturverlauf eines Wechselrichters der Motorsteuerschaltung.

Die Figuren sind beispielhaft schematisch. Gleiche Bezugszeichen in den Figuren weisen auf gleiche funktionale und/oder strukturelle Merkmale hin.

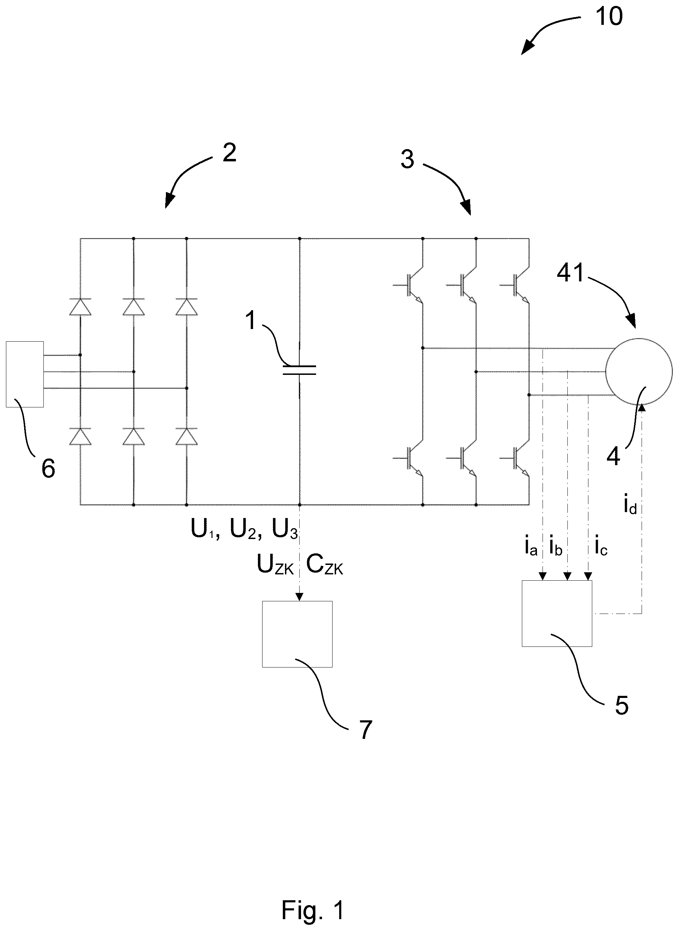

In Figur 1 ist ein schematischer Schaltplan einer Motorsteuerschaltung 10 eines elektrisch kommutierten Motors 4 mit Motorwicklungen 41 zur Überwachung zumindest eines Zwischenkreiskondensators 1 in einem elektrischen Zwischenkreis der an einer Spannungsquelle 6 betriebenen Motorsteuerschaltung 10 des EC-Motors 4 dargestellt. Die Motorsteuerschaltung 10 umfasst einen Gleichrichter 2 und einen Wechselrichter 3. Ferner befindet sich zwischen dem Gleichrichter 2 und dem Wechselrichter 3 der zu überwachende Zwischenkreiskondensator 1. Außerdem ist ein PI-Regler 5 zum Regeln einer d-Stromkomponente $i_d$ eines Zwischenkreisstroms vorgesehen, derart, dass Energie aus der Motorsteuerschaltung 10 in einem Magnetfeld der Motorwicklungen 41 des EC-Motors 4 gespeichert wird und/oder die entsprechend aus der Motorsteuerschaltung 10 in dem Magnetfeld der Motorwicklungen 41 gespeicherte Energie in die Motorsteuerschaltung 10 zurück entladen wird. Darüber hinaus ist eine Auswerteschaltung 7 zum Bestimmen einer Rest-Lebensdauer oder eines Lebensdauer- und/oder Brauchbarkeitsdauer-Endes des Zwischenkreiskondensators 1 aus einer ermittelten Zwischenkreiskapazität $C_{ZK}$ vorgesehen.

Die Motorsteuerungsschaltung 10 weist eine Sensorik zum Betrieb des EC-Motors 4 auf und diese Sensorik wird gleichzeitig zur Leistungserfassung und/oder Spannungserfassung des Spannungsrippels am Zwischenkreiskondensators 1 und/oder zur zumindest intermittierenden Ermittlung der Motorphasenströme $i_a$, $i_b$, $i_c$ im Betrieb des EC-Motors 4 verwendet.

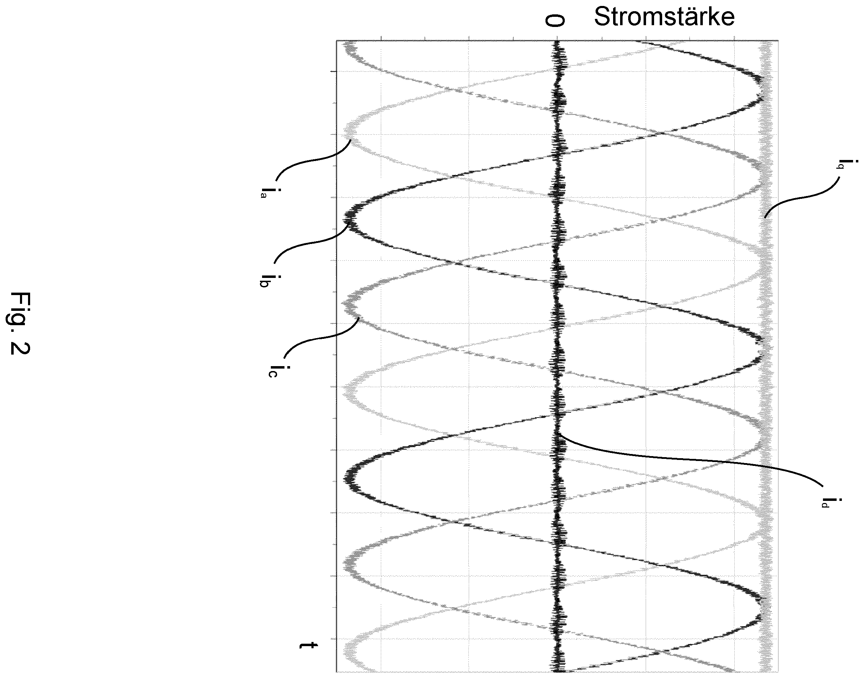

Figur 2 zeigt einen zeitlichen Verlauf von Motorphasenströmen $i_a$, $i_b$, $i_c$ sowie einer q-Stromkomponente $i_q$ und einer d-Stromkomponente $i_d$ der Motorsteuerschaltung 10 im rotierenden Koordinatensystem.

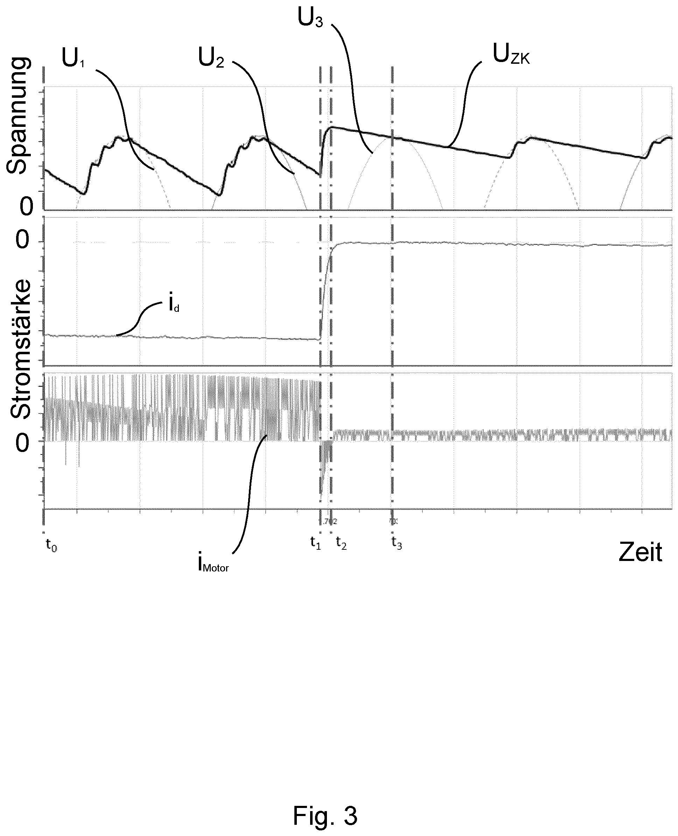

In Figur 3 ist ein zeitlicher Verlauf gleichgerichteter Eingangsspannungen $U_1$, $U_2$, $U_3$ und einer Zwischenkreisspannung $U_{ZK}$ sowie einer d-Stromkomponente $i_d$ und eines Motorstroms $i_{Motor}$ der Motorsteuerschaltung 10 während der Anwendung eines erfindungsgemäßen Verfahrens dargestellt.

Da der Spannungsrippel der Zwischenkreisspannung $U_{ZK}$ im regulären Motorbetrieb kurzzeitig vergrößert werden soll, muss die Energie, die im Magnetfeld der Motorwicklungen 41 gespeichert ist, für den Weiterbetrieb des Motors, sowie für die Rückspeisung in den Zwischenkreiskondensator 1 ausreichen, sodass zwischenzeitlich kein Strom aus der Spannungsquell 6 entnommen wird. Hierzu wird die d-Stromkomponente $i_d$ mittels des Reglers 5 derart geregelt, dass sie einen sägezahnförmigen Verlauf aufweist.

Darin ist erkennbar, dass während des Zeitraums $t_0$ bis $t_1$ Energie im Magnetfeld der Motorwicklungen 41 gespeichert wird, da $i_d < 0$ und $\frac{di_d}{dt} < 0$. Um die Beeinflussung des Motorlaufs möglichst gering zu halten, wird die Steilheit der Flanke in diesem Zeitraum so gewählt, dass diese Ladung über mehr als eine Netzperiode kontinuierlich stattfindet. Im darauffolgenden Zeitraum, von $t_1$ bis $t_2$ wird die d-Stromkomponente $i_d$ mit einer möglichst steilen Flanke erhöht, sodass $i_d < 0$ und $\frac{di_d}{dt} > 0$ ist und Energie aus den Motorwicklungen 41 zurück in den Zwischenkreis gespeist wird. Dabei wird die d-Stromkomponente $i_d$ mittels des Reglers 5 auf einen vorbestimmten negativen Sollwert geregelt.

Zur Regelung der d-Stromkomponente $i_d$ und q-Stromkomponente $i_q$ ist es notwendig die Motorphasenströme im Betrieb zu erfassen. Da während der Rückspeisung die Spannung am Zwischenkreiskondensator $U_{ZK}$ größer ist als die Spannung der zuvor speisenden Eingangsspannungen $U_1$, $U_2$, $U_3$, sperren die Dioden des Gleichrichters 2 und es wird kurzzeitig keine Energie aus der Spannungsquelle 6 aufgenommen, siehe Zeitraum $t_1$ bis $t_3$. Somit sind sowohl der Strom- als auch der Spannungsverlauf des Zwischenkreiskondensators 1 bekannt und es kann über die Auswerteschaltung 7 mit Hilfe eines Beobachtersystems auf den inversen Kapazitätswert geschlossen werden.

Bei dem erfindungsgemäßen Verfahren erfolgt demnach ein Erfassen der Motorphasenströme $i_a$, $i_b$, $i_c$ und Ermitteln einer d-Stromkomponente $i_d$ zum Steuern und/oder Regeln des Motors 4 in Zeigerschreibweise im rotierenden Koordinatensystem. Ferner erfolgt ein Erfassen und/oder Messen eines Spannungsrippels einer sich an dem Zwischenkreiskondensator 1 einstellenden Zwischenkreisspannung $U_{ZK}$. Außerdem erfolgt ein Regeln der d-Stromkomponente $i_d$ mittels des Reglers 5 derart, dass Energie aus der Motorsteuerschaltung 10 in dem Magnetfeld der Motorwicklungen 41 des EC-Motors 4 gespeichert wird, sowie ein Regeln der d-Stromkomponente $i_d$ mittels des Reglers 5, derart, dass die dadurch in den Motorwicklungen gespeicherte Energie in die Motorsteuerschaltung 10 zurück entladen wird. Dabei ist beim Entladen der gespeicherten Energie aus dem Magnetfeld der Motorwicklungen 41 des EC-Motors 4 der Spannungsrippel der Zwischenkreisspannung $U_{ZK}$ größer als die Eingangsspannung $U_1$, $U_2$, $U_3$ der Spannungsquelle 6, derart, dass Gleichrichterdioden des Gleichrichters 2 bestimmungsgemäß schließen, um eine Energieaufnahme aus der Spannungsquelle 6 für eine definierte Zeitspanne zu verhindern. Darüber hinaus erfolgt ein Ermitteln der Zwischenkreiskapazität $C_{ZK}$ des Zwischenkreiskondensators 1 und ein Bestimmen einer Rest-Lebensdauer oder eines Lebensdauer- und/oder Brauchbarkeitsdauer-Endes des Zwischenkreiskondensators 1 aus der ermittelten Zwischenkreiskapazität $C_{ZK}$ mittels einer Auswerteschaltung 7.

Bei dem Verfahren wird die d-Stromkomponente $i_d$ zum Speichern von Energie aus der Motorsteuerschaltung 10 in dem Magnetfeld der Motorwicklungen 41 derart mittels des Reglers 5 geregelt, dass gilt: $i_L > 0$ und

$$\frac{di_L}{dt} > 0 \quad ; \text{oder } i_L < 0 \text{ und} \quad \frac{di_L}{dt} < 0 \quad .$$

Dabei wird die d-Stromkomponente $i_d$ zum Speichern von Energie aus der Motorsteuerschaltung 10 in den Motorwicklungen 41 derart mittels des Reglers 5 geregelt, dass das Speichern über mehr als eine Netzperiode der Spannungsquelle 6 kontinuierlich erfolgt. Darüber hinaus wird die d-Stromkomponente $i_d$ zum Entladen in dem Magnetfeld der Motorwicklungen 41 gespeicherten Energie aus dem Magnetfeld der Motorwicklungen 41 zurück in die Motorsteuerschaltung 10 derart mittels des Reglers 5 geregelt,

$$\frac{di_L}{dt} < 0 \qquad \frac{di_L}{dt} > 0$$

dass gilt: $i_L > 0$ und $\quad$ ; oder $i_L < 0$ und $\quad$ .

Die Motorphasenströme $i_a$, $i_b$, $i_c$ werden im Betrieb des EC-Motors 4 mittels der Sensorik zumindest intermittierend ermittelt. Ferner erfolgt zur Ermittlung der Zwischenkreiskapazität $C_{ZK}$ des Zwischenkreiskondensators 1 die Leistungserfassung und die Spannungserfassung am Zwischenkreiskondensator 1 zur Bestimmung des Spannungsrippels.

Bei dem Beobachtersystem zur Ermittlung der Zwischenkreiskapazität $C_{ZK}$ wird der Zwischenkreisstrom aus bereits erfassten Eingangsmessgrößen der Motorsteuerungsschaltung, welche ohnehin zur Regelung des Motorbetriebs benötigt werden, wie beispielsweise der aus dem Netz aufgenommenen Leistung, der vom Motor abgegebenen Leistung, der Netzeingangsspannung, dem Motorstrom, den Strangspannungen des Motors, nachgebildet. Der Zwischenkreisstrom wird anschließend mit der inversen Zwischenkreiskapazität multipliziert und integriert, sodass eine geschätzte Zwischenkreisspannung berechnet wird. Die Differenz der geschätzten Zwischenkreisspannung und der tatsächlich gemessenen Zwischenkreisspannung wird ebenfalls aufintegriert und anschließend als inverse Zwischenkreiskapazität betrachtet, sodass eine Beobachterschleife entsteht. Diese Regelschleife führt die geschätzte Zwischenkreisspannung der gemessenen Zwischenkreisspannung nach und ist somit dazu in der Lage die Zwischenkreiskapazität zu schätzen.

Dabei wird der Beobachter jedoch nur aktiviert wird, während der Spannungsrippel der Zwischenkreisspannung $U_{ZK}$ größer ist als die Eingangsspannung $U_1$, $U_2$, $U_3$ der Spannungsquelle 6. Danach erfolgt eine Deaktivierung, wobei insbesondere die Aktivierung und/oder Deaktivierung durch eine Multiplikation mit 0 oder innerhalb eines Regelalgorithmus dadurch erreicht werden, dass eine Berechnung des Beobachters nicht ausgeführt wird.

Alternativ werden ein Maximalwert des Spannungsrippels und/oder ein Vergleich zwischen einem erfassten Spannungsverlauf und einer Look-Up-Table dazu verwendet werden, um auf eine Abnahme der Zwischenkreiskapazität $C_{ZK}$ oder einen Anstieg eines inneren Verlustwiderstands des Zwischenkreiskondensators 1 zu schließen.

Darüber hinaus ist es möglich, einen Sollwert für die d-Stromkomponente $i_d$ mit einem überlagerten PI-Regler zu berechnen. Dabei wird auf einen Eingang des Reglers 5 eine Differenz zwischen der Soll-Zwischenkreisspannung und der gemessenen Zwischenkreisspannung $U_{ZK}$ geschalten. Ferner wird als Soll-Zwischenkreisspannung eine sprungförmige Anregung auf die gemessene Zwischenkreisspannung $U_{ZK}$ aufaddiert und/oder ein konstanter Wert genutzt, sodass ein Verlauf der d-Stromkomponente $i_d$ von dem Regler 5 gebildet wird.

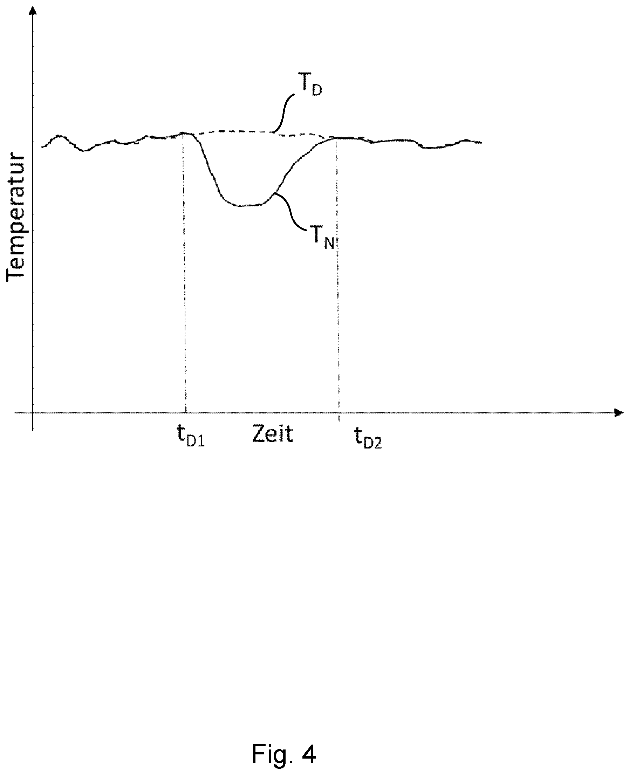

In Figur 4 ist ein zeitlicher Temperaturverlauf des Wechselrichters 3, insbesondere eines Leistungsmoduls des Wechselrichters 3, der Motorsteuerschaltung 10 dargestellt.

Da durch die kurzzeitige Erhöhung des Betrags der d-Stromkomponente $i_d$ mehr Leistung durch den Wechselrichter 3 in den EC-Motor 4 eingebracht wird, wird die Temperatur des Moduls durch das erfindungsgemäße Verfahren kurzzeitig erhöht. In einer weiteren Variante wird daher der Zeitpunkt der Injektion der d-Stromkomponente $i_d$ bewusst so gewählt, dass die Alterung des Wechselrichters 3 reduziert werden kann. Da die Wechselrichter 3, insbesondere deren Leistungsmodule, üblicherweise mit steigender Anzahl an Temperaturzyklen bzw. -sprüngen altern, kann beispielsweise eine Temperaturvorhersage eines überlagerten neuronalen Netzes oder eines Temperaturmodells, wie sie in Abbildung 4 dargestellt ist, dazu genutzt werden um Temperatursprünge, wie zwischen den Zeitpunkten $t_{D1}$ und $t_{D2}$ dargestellt, vorherzusagen. Wird dann zwischen den Zeitpunkten $t_{D1}$ und $t_{D2}$ eine größere d-Stromkomponente $i_d$ vom Regler 5 eingestellt, durchläuft der Wechselrichter 3 die Temperaturkurve $T_D$ anstelle der Temperaturkurve $T_N$. Die Anzahl an Temperaturzyklen im Betrieb des Wechselrichters 3 wird somit verringert und die Lebensdauer erhöht. Es ist weiterhin denkbar, dass der Betrag und der zeitliche Verlauf d-Stromkomponente $i_d$ so gewählt werden, dass Wechselrichter 3 gezielt einen bestimmten Temperaturverlauf durchläuft, ohne den Motorlauf zu beeinflussen.

Demnach wird in einer Ausführung des Verfahrens eine Temperaturvorhersage einer Temperatur des Wechselrichters 3, insbesondere mittels eines überlagerten neuronalen Netzes und/oder eines Temperaturmodells, zum Vorhersagen von Temperatursprüngen ermittelt, wobei die entsprechend vorhergesagten Temperatursprünge durch einer Regelung d-Stromkomponente $i_d$ mittels des Regler 5, insbesondere einer Erhöhung der d-Stromkomponente $i_d$, zumindest anteilig kompensiert werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Verfahren zur Überwachung zumindest eines Zwischenkreiskondensators (1) in einem elektrischen Zwischenkreis einer an einer Spannungsquelle (6) betriebenen Motorsteuerschaltung (10) eines elektrisch kommutierten Motors (4) mit Motorwicklungen (41), umfassend einen Gleichrichter (2) und einen Wechselrichter (3), wobei sich zwischen dem Gleichrichter (2) und dem Wechselrichter (3) der zumindest eine zu überwachende Zwischenkreiskondensator (1) befindet, welches die Schritte umfasst:

> a. Erfassen der Motorphasenströme ($i_a$, $i_b$, $i_c$) und Ermitteln einer d-Stromkomponente ($i_d$) zum Steuern und/oder Regeln des Motors (4);
> b. Erfassen und/oder Messen eines Spannungsrippels einer sich an dem Zwischenkreiskondensator (1) einstellenden Zwischenkreisspannung ($U_{ZK}$);
> c. Regeln der d-Stromkomponente ($i_d$) mittels eines Reglers (5), derart, dass Energie aus der Spannungsquelle und/oder Motorsteuerschaltung (10) in einem Magnetfeld der Motorwicklungen (41) des EC-Motors (4) gespeichert wird;
> d. Regeln der d-Stromkomponente ($i_d$) mittels des Reglers (5), derart, dass die in Schritt c) gespeicherte Energie in die Motorsteuerschaltung (10), insbesondere den zumindest einen Zwischenkreiskondensator (1), zurück entladen wird;
> wobei beim Entladen der gespeicherten Energie aus dem Magnetfeld der Motorwicklungen (41) des EC-Motors (4) die Zwischenkreisspannung ($U_{ZK}$) größer ist als eine Eingangsspannung ($U_1$, $U_2$, $U_3$) der Spannungsquelle (6), derart, dass Gleichrichterdioden des Gleichrichters (2) bestimmungsgemäß sperren, um eine Energieaufnahme aus der Spannungsquelle (6) für eine definierte Zeitspanne zu verhindern,
> e. Ermitteln einer Zwischenkreiskapazität ($C_{ZK}$) des Zwischenkreiskondensators (1);
> f. Bestimmen einer Rest-Lebensdauer oder eines Lebensdauer- und/oder Brauchbarkeitsdauer-Endes des Zwischenkreiskondensators (1) aus der ermittelten Zwischenkreiskapazität ($C_{ZK}$) mittels einer Auswerteschaltung (7),

wobei die d-Stromkomponente ($i_d$) zum Speichern von Energie aus der Spannungsquelle und/oder Motorsteuerschaltung (10) in dem Magnetfeld der Motorwicklungen (41) derart mittels des Reglers (5) geregelt wird, dass gilt: $i_L > 0$ und $\dfrac{di_L}{dt} > 0$; oder $i_L < 0$ und $\dfrac{di_L}{dt} < 0$.

2. Verfahren gemäß Anspruch 1, wobei die d-Stromkomponente ($i_d$) zum Speichern von Energie aus der Motorsteuerschaltung (10) in den Motorwicklungen (41) derart mittels des Reglers (5) geregelt wird, dass das Speicher über mehr als eine Netzperiode der Spannungsquelle (6) kontinuierlich erfolgt.

3. Verfahren gemäß Anspruch 1 oder 2, wobei die d-Stromkomponente ($i_d$) zum Entladen der in Schritt c) in dem Magnetfeld der Motorwicklungen (41) gespeicherten Energie aus dem Magnetfeld der Motorwicklungen (41) zurück in die Motorsteuerschaltung (10) derart mittels des Reglers (5) geregelt wird, dass gilt: $i_L > 0$ und $\dfrac{di_L}{dt} < 0$ ; oder $i_L < 0$ und $\dfrac{di_L}{dt} > 0$ .

4. Verfahren gemäß Anspruch 3, wobei die d-Stromkomponente ($i_d$) nach der Entladung mittels des Reglers (5) auf einen vorbestimmten negativen Sollwert oder auf den Sollwert 0 A geregelt wird.

5. Verfahren gemäß einem der Ansprüche 1 bis 4, wobei die d-Stromkomponente ($i_d$) mittels des Reglers (5) derart geregelt wird, dass sie einen sägezahnförmigen Verlauf und/oder einen zumindest anteilig sinusförmigen Verlauf und/oder einen rechteckförmigen sprungförmigen Verlauf aufweist.

6. Verfahren gemäß einem der vorhergehenden Ansprüche, wobei die Motorsteuerungsschaltung (10) eine Sensorik zum Betrieb des EC-Motors (4) aufweist und diese Sensorik gleichzeitig zur Leistungserfassung und/oder Spannungserfassung des Spannungsrippels am Zwischenkreiskondensators (1) und/oder zur zumindest intermittierenden Ermittlung der Motorphasenströme ($i_a$, $i_b$, $i_c$) im Betrieb des EC-Motors (4) verwendet wird, wobei insbesondere die Motophasenströme ($i_a$, $i_b$, $i_c$) im Betrieb des EC-Motors (4) zumindest intermittierend ermittelt werden.

7. Verfahren gemäß Anspruch 6, wobei zur Ermittlung der Kapazität ($C_{ZK}$) des Zwischenkreiskondensators (1) die Leistungserfassung und die Spannungserfassung am Zwischenkreiskondensator (1) zur Bestimmung der Zwischenkreiskapazität erfolgt.

8. Verfahren gemäß einem der vorhergehenden Ansprüche, wobei die Ermittlung der Zwischenkreiskapazität ($C_{ZK}$) durch ein Beobachtersystem erfolgt, wobei vorzugsweise der Beobachter nur aktiviert wird während der Spannungsrippel der Zwischenkreisspannung ($U_{ZK}$) größer ist als die Eingangsspannung ($U_0$) der Spannungsquelle (6), wobei insbesondere danach eine Deaktivierung erfolgt, wobei insbesondere die Aktivierung und/oder Deaktivierung durch eine Multiplikation mit 0 oder innerhalb eines Regelalgorithmus dadurch erreicht werden, dass eine Berechnung des Beobachters nicht ausgeführt wird.

9. Verfahren gemäß einem der vorhergehenden Ansprüche, wobei ein Maximalwert des Spannungsrippels und/oder ein Vergleich zwischen einem erfassten Spannungsverlauf und einem Look-Up-Table dazu verwendet werden, um auf eine Abnahme der Zwischenkreiskapazität ($C_{ZK}$) oder einen Anstieg eines inneren Verlustwiderstands des Zwischenkreiskondensators (1) zu schließen.

10. Verfahren gemäß einem der vorhergehenden Ansprüche, wobei ein Sollwert für die d-Stromkomponente ($i_d$) mit einem überlagerten PI-Regler berechnet wird, wobei auf einen Eingang des Reglers (5) eine Differenz zwischen der Soll-Zwischenkreisspannung und der gemessenen Zwischenkreisspannung geschalten wird, wobei insbesondere als Soll-Zwischenkreisspannung eine sprungförmige Anregung auf die gemessene Zwischenkreisspannung ($U_{ZK}$) aufaddiert wird und/oder ein konstanter Wert genutzt wird, sodass ein Verlauf der d-Stromkomponente ($i_d$) von dem Regler (5) gebildet wird.

11. Verfahren gemäß einem der vorhergehenden Ansprüche, wobei eine Kurvenform der d-Stromkomponente ($i_d$) mittels eines neuronalen Netzes und/oder einer künstlichen Intelligenz und/oder in Abhängigkeit der Motorleistung und/oder der Drehzahl im Betrieb je nach Arbeitspunkt angepasst wird.

12. Verfahren gemäß einem der vorhergehenden Ansprüche, wobei ein Spektrum eines vorgegebenen Sollstroms mittels einer Vorfilterung, vorzugsweise mittels eines Tiefpassfilters, zur Vermeidung von Geräuschbildungen der Motorwicklungen (41) angepasst wird, wobei insbesondere gezielt Anteile des Spektrums und/oder eine benötigte Regelreserve und/oder eine Bandbreite reduziert werden.

13. Verfahren gemäß einem der vorhergehenden Ansprüche, wobei eine Temperaturvorhersage einer Temperatur des Wechselrichters (3), insbesondere eines Leistungsmoduls des Wechselrichters (3), insbesondere mittels eines überlagerten neuronalen Netzes und/oder eines Temperaturmodells, zum Vorhersagen von Temperatursprüngen ermittelt wird, wobei die entsprechend vorhergesagten Temperatursprünge durch einer Regelung d-Stromkomponente ($i_d$) mittels des Regler (5), insbesondere einer Erhöhung der d-Stromkomponente ($i_d$), zumindest anteilig kompensiert werden.

14. Motorsteuerschaltung (10) eines elektrisch kommutierten (EC) Motors (4) mit Motorwicklungen (41) zur Überwachung zumindest eines Zwischenkreiskondensators (1) in einem elektrischen Zwischenkreis der an einer Spannungsquelle (6) betriebenen Motorsteuerschaltung (10) des EC-Motors (4), vorzugsweise gemäß einem Verfahren der vorhergehenden Ansprüche, umfassend einen Gleichrichter (2) und einen Wechselrichter (Frequenzumrichter) (3), wobei sich zwischen dem Gleichrichter (2) und dem Wechselrichter (3) der zumindest eine zu überwachende Zwischenkreiskondensator (1) befindet, wobei ein Regler (5) zum Regeln einer d-Stromkomponente (id) eines Zwischenkreisstroms vorgesehen ist, derart, dass Energie aus der Motorsteuerschaltung (10) in einem Magnetfeld der Motorwicklungen (41) des EC-Motors (4) gespeichert wird und/oder die entsprechend aus der Motorsteuerschaltung (10) in dem Magnetfeld der Motorwicklungen (41) gespeicherte Energie in die Motorsteuerschaltung (10) zurück entladen wird, wobei eine Auswerteschaltung (7) zum Bestimmen einer Rest-Lebensdauer oder eines Lebensdauer- und/oder Brauchbarkeitsdauer-Endes des Zwischenkreiskondensators (1) aus einer ermittelten Zwischenkreiskapazität ($C_{ZK}$) vorgesehen ist.

Fig. 1

Fig. 2

Fig. 3

Fig. 4

Europäisches
Patentamt

European
Patent Office

Office européen
des brevets

# EUROPÄISCHER RECHERCHENBERICHT

Nummer der Anmeldung

EP 25 17 1205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | MENG TIANZE ET AL: "An Online DC-Link Capacitance Estimation Method for Motor Drive Systems Based on an Intermittent Reverse-Charging Control Strategy", IEEE TRANSACTIONS ON POWER ELECTRONICS, INSTITUTE OF ELECTRICAL AND ELECTRONICS ENGINEERS, USA, Bd. 38, Nr. 2, 30. September 2022 (2022-09-30), Seiten 2481-2492, XP011927366, ISSN: 0885-8993, DOI: 10.1109/TPEL.2022.3211314 [gefunden am 2022-10-03] * das ganze Dokument * ----- | 1-14 | INV. H02P21/13 H02P21/16 H02P21/22 H02P29/60 |
| Y | US 9 722 523 B2 (UNIV YEUNGNAM RES COOPERATION FOUNDATION [KR]) 1. August 2017 (2017-08-01) * das ganze Dokument * ----- | 1-14 | |
| Y | EP 3 223 023 A1 (ABB TECHNOLOGY OY [FI]) 27. September 2017 (2017-09-27) * das ganze Dokument * ----- | 1-14 | RECHERCHIERTE SACHGEBIETE (IPC) H02P G01R |
| A | EP 3 555 644 B1 (ZIEHL ABEGG SE [DE]) 26. April 2023 (2023-04-26) * das ganze Dokument * ----- | 1-14 | |
| A | CN 116 819 403 A (UNIV HEFEI TECHNOLOGY) 29. September 2023 (2023-09-29) * das ganze Dokument * ----- | 1-14 | |

Der vorliegende Recherchenbericht wurde für alle Patentansprüche erstellt

| Recherchenort | Abschlußdatum der Recherche | Prüfer |
|---|---|---|
| München | 11. August 2025 | Wimböck, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 17 1205

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2025

| Im Recherchenbericht angeführtes Patentdokument | Datum der Veröffentlichung | Mitglied(er) der Patentfamilie | Datum der Veröffentlichung |
|---|---|---|---|
| US 9722523 B2 | 01-08-2017 | KR 101605990 B1<br>US 2016282392 A1 | 23-03-2016<br>29-09-2016 |
| EP 3223023 A1 | 27-09-2017 | CN 107404237 A<br>EP 3223023 A1 | 28-11-2017<br>27-09-2017 |
| EP 3555644 B1 | 26-04-2023 | CN 111417861 A<br>DE 102017221096 A1<br>EP 3555644 A1<br>ES 2949848 T3<br>SI 3555644 T1<br>US 2020363480 A1<br>WO 2019101273 A1 | 14-07-2020<br>29-05-2019<br>23-10-2019<br>03-10-2023<br>29-09-2023<br>19-11-2020<br>31-05-2019 |
| CN 116819403 A | 29-09-2023 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652445 A2
- DE 102019117369 A
- CN 105717368 B
- EP 3477314 B1
- EP 3555644 B1